(19) Europäisches Patentamt
European Patent Office
Office européen des brevets

(11) **EP 2 407 804 B1**

(12) **EUROPEAN PATENT SPECIFICATION**

(45) Date of publication and mention
of the grant of the patent:
**20.08.2014 Bulletin 2014/34**

(51) Int Cl.:
*G01V 1/36* (2006.01) *G01V 1/38* (2006.01)

(21) Application number: **11184729.9**

(22) Date of filing: **25.06.2008**

(54) **Removing vibration noise from multicomponent streamer measurements**

Entfernung von Vibrationsrauschen aus Messungen von Mehrkomponenten-Streamern

Élimination du bruit de vibration de mesures de flûtes sismiques multi-composantes

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **09.08.2007 US 836587**

(43) Date of publication of application:
**18.01.2012 Bulletin 2012/03**

(62) Document number(s) of the earlier application(s) in
accordance with Art. 76 EPC:
**08780998.4 / 2 191 302**

(73) Proprietor: **Geco Technology B.V.
2586 BJ S'Gravenhage (NL)**

(72) Inventors:
• **Pabon, Jahir
Wellesley, MA Massachusetts 02482 (US)**
• **Teigen, Oeyvind
0253 Oslo (NO)**

(74) Representative: **Suckling, Andrew Michael
Marks & Clerk LLP
Fletcher House
Heatley Road
The Oxford Science Park
Oxford OX4 4GE (GB)**

(56) References cited:
FR-A- 2 884 930 US-A1- 2003 147 306
US-A1- 2004 042 341 US-B1- 6 775 618
US-B2- 7 123 543

EP 2 407 804 B1

**Description**

BACKGROUND

The invention generally relates to removing vibration noise from multicomponent streamer measurements.

Seismic exploration involves surveying subterranean geological formations for hydrocarbon deposits. A survey typically involves deploying seismic source(s) and seismic sensors at predetermined locations. The sources generate seismic waves, which propagate into the geological formations creating pressure changes and vibrations along their way. Changes in elastic properties of the geological formation scatter the seismic waves, changing their direction of propagation and other properties. Part of the energy that is emitted by the sources reaches the seismic sensors. Some seismic sensors are sensitive to pressure changes (hydrophones), others to particle motion (e.g., geophones), and industrial surveys may deploy only one type of sensors or both. In response to the detected seismic events, the sensors generate electrical signals to produce seismic data. Analysis of the seismic data can then indicate the presence or absence of probable locations of hydrocarbon deposits.

Some surveys are known as "marine" surveys because they are conducted in marine environments. However, "marine" surveys may be conducted not only in saltwater environments, but also in fresh and brackish waters. In one type of marine survey, called a "towed-array" survey, an array of seismic sensor-containing streamers and sources is towed behind a survey vessel.

A particular marine survey may involve towing a pressure and particle motion sensors on one or more streamers behind a surface vessel. The particular motion sensors typically are sensitive to vibration noise. In the directions that are transverse to the direction in which the streamer is towed, the vibration propagates at velocities much lower than the acoustic velocity of sound in water; and therefore, the vibration noise typically has been determinative of the sensor spacing along the streamer in order to record seismic data, which does not contain aliased vibration noise.

SUMMARY

In an embodiment of the invention, a technique includes obtaining a particle motion measurement and a pressure gradient measurement, which were acquired by seismic sensors while in tow. The technique includes removing noise from one of the measurements, which includes scaling the measurements relative to each other and subtracting one of the measurements from the other measurement.

In another embodiment of the invention, a system includes an interface and a processor. The interface is adapted to receive data that is indicative of a particle motion measurement and a pressure gradient measurement, which were acquired by seismic sensors while in tow. The processor is adapted to process the data to remove noise from one of the measurements by scaling the measurements relative to each other and subtracting one of the measurements from the other measurement.

In another embodiment of the invention, an article includes a computer accessible storage medium that stores instructions, which when executed cause a processor-based system to access data indicative of a particle motion measurement and a pressure gradient measurement, which were acquired by seismic sensors while in tow. The instructions when executed cause the processor-based system to process the data to remove noise from one of the measurements, the processing of the data including scaling the measurements relative to each other and subtracting one of the measurements from the other measurement.

In another embodiment of the invention, a system includes a streamer that is adapted to be towed during a seismic survey. A particle motion sensor, a pressure gradient sensor and a pressure sensor are attached to the streamer. The pressure gradient sensor may comprise a plurality of sensors. The plurality of sensors may comprise a plurality of pressure sensors. The streamer may comprise seismic sensors spaced apart according to a first sensor spacing along an inline direction, and the sensors of the plurality of sensors may be spaced apart by a significantly smaller spacing than the first spacing. The plurality of pressure sensors may be distributed in a crossline direction relative to the streamer. The plurality of pressure sensors may be distributed in a vertical direction relative to the streamer.

In yet another embodiment of the invention, a technique includes performing a seismic survey, including towing a particle motion sensor, a pressure gradient sensor and a pressure sensor.

Advantages and other features of the invention will become apparent from the following drawing, description and claims.

BRIEF DESCRIPTION OF THE DRAWING

Fig. 1 is a schematic diagram of a marine seismic data acquisition system according to an embodiment of the invention.

Figs. 2 and 5 are flow diagrams depicting techniques to remove vibration noise according to embodiments of the invention.

Fig. 3 is an illustration of a pressure gradient and a particle acceleration at a point due to a traveling acoustic signal.

Fig. 4 is an illustration of a pressure gradient and a particle acceleration at a point due to vibration noise.

Fig. 6 is a schematic diagram of a seismic data processing system according to an embodiment of the invention.

DETAILED DESCRIPTION

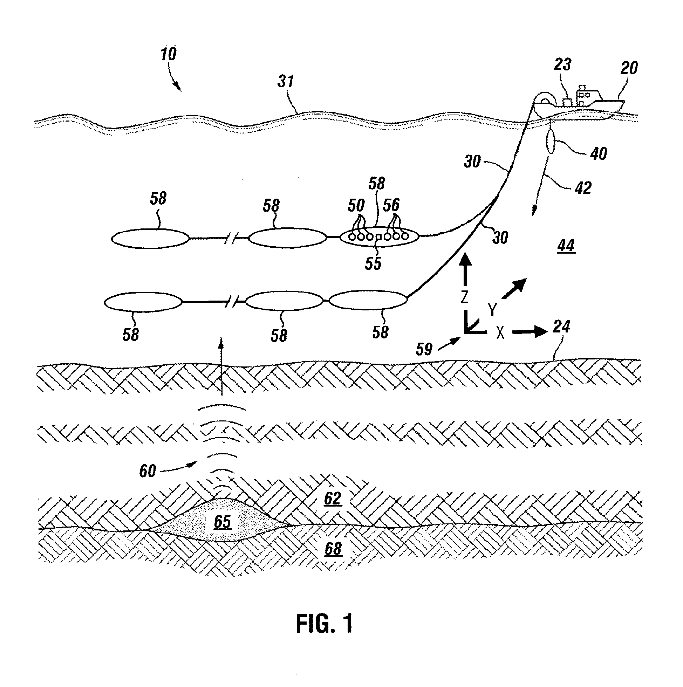

Fig. 1 depicts an embodiment 10 of a marine seismic data acquisition system in accordance with some embodiments of the invention. In the system 10, a survey vessel 20 tows one or more seismic streamers 30 (two exemplary streamers 30 being depicted in Fig. 1) behind the vessel 20. The seismic streamers 30 may be several thousand meters long and may contain various support cables (not shown), as well as wiring and/or circuitry (not shown) that may be used to support communication along the streamers 30.

Each seismic streamer 30 contains seismic sensors, which record seismic signals. In accordance with some embodiments of the invention, the seismic sensors are multi-component seismic sensors 58, each of which is capable of detecting a pressure wavefield and at least one component of a particle motion that is associated with acoustic signals that are proximate to the multi-component seismic sensor 58. Examples of particle motions include one or more components of a particle displacement, one or more components (inline (x), crossline (y) and vertical (z) components (see axes 59, for example)) of a particle velocity and one or more components of a particle acceleration.

Depending on the particular embodiment of the invention, the multi-component seismic sensor 58 may include one or more hydrophones, geophones, particle displacement sensors, particle velocity sensors, accelerometers, pressure gradient sensors, or combinations thereof.

For example, in accordance with some embodiments of the invention, a particular multi-component seismic sensor 58 may include a hydrophone 55 for measuring pressure and three orthogonally-aligned accelerometers 50 to measure three corresponding orthogonal components of particle velocity and/or acceleration near the seismic sensor 58. It is noted that the multi-component seismic sensor 58 may be implemented as a single device (as depicted in Fig. 1) or may be implemented as a plurality of devices, depending on the particular embodiment of the invention. A particular multi-component seismic sensor 58 may also include one or more pressure gradient sensors 56, another type of particle motion sensor. The pressure gradient sensor measures the change in the pressure wavefield at a particular point with respect to a particular direction. For example, one of the pressure gradient sensors 56 may acquire seismic data indicative of, at a particular point, the partial derivative of the pressure wavefield with respect to the crossline direction, and another one of the pressure gradient sensors may acquire, a particular point, seismic data indicative of the pressure data with respect to the inline direction.

In some embodiments of the invention, a particle pressure gradient sensor may a single sensor, which generates a signal that is indicative of a sensed pressure gradient. In other embodiments of the invention, a pressure gradient sensor may be formed from two acoustic, or pressure, sensors, which are located closely together on the streamer 30. For example, a pressure gradient sensor to detect a pressure gradient in the crossline direction may be formed from two pressure sensors that are part of the same streamer. The two pressure sensor may be located at essentially the same inline position, but the two pressure sensors are slightly offset from each other along the crossline direction. Therefore the two pressure sensors collectively produce a differential signal that is indicative of the pressure gradient in the crossline direction. The spacing between each pair of pressure sensors is significantly less than, for example, the spacing between the pressure sensors of the streamer in the inline direction. Additionally, one or possibly both of the pair may be used to independently provide an indication of a detected pressure and thus, may also serve as a pressure sensor or sensors.

In a similar arrangement, two pressure sensors of the same streamer may likewise be located at the same inline position but may be offset vertically to produce a differential signal that is indicative of the pressure gradient in the vertical direction. Thus, many variations are contemplated and are within the scope of the appended claims.

For purposes of simplifying the discussion herein, the language "pressure gradient sensor" is used, with it being understood that each "pressure gradient sensor" may be formed from one or more sensors, where each of these sensor(s) may be a pressure gradient sensor that directly provides a signal that is indicative of the pressure gradient. or may be a combination of acoustic, or pressure, sensors.

The marine seismic data acquisition system 10 includes one or more seismic sources 40 (one exemplary source 40 being depicted in Fig. 1), such as air guns and the like. In some embodiments of the invention, the seismic sources 40 may be coupled to, or towed by, the survey vessel 20. Alternatively, in other embodiments of the invention, the seismic sources 40 may operate independently of the survey vessel 20, in that the sources 40 may be coupled to other vessels or buoys, as just a few examples.

As the seismic streamers 30 are towed behind the survey vessel 20, acoustic signals 42 (an exemplary acoustic signal 42 being depicted in Fig. 1), often referred to as "shots," are produced by the seismic sources 40 and are directed down through a water column 44 into strata 62 and 68 beneath a water bottom surface 24. The acoustic signals 42 are reflected from the various subterranean geological formations, such as an exemplary formation 65 that is depicted in Fig. 1.

The incident acoustic signals 42 that are acquired by the sources 40 produce corresponding reflected acoustic signals, or pressure waves 60, which are sensed by the multi-component seismic sensors 58. It is noted that the pressure waves that are received and sensed by the multi-component seismic sensors 58 include "up going" pressure waves that propagate to the sensors 58 without reflection, as well as "down going" pressure waves that are produced by reflections of the pressure waves 60 from an air-water boundary 31.

The multi-component seismic sensors 58 generate signals (digital signals, for example), called "traces," which indicate the acquired measurements of the pressure wavefield and particle motion. The traces are recorded and may be at least partially processed by a signal processing unit 23 that is deployed on the survey vessel 20, in accordance with some embodiments of the invention. For example, a particular multi-component seismic sensor 58 may provide a trace, which corresponds to a measure of a pressure wavefield by its hydrophone 55; and the sensor 58 may provide one or more traces that correspond to one or more components of particle motion, which are measured by its accelerometers 50.

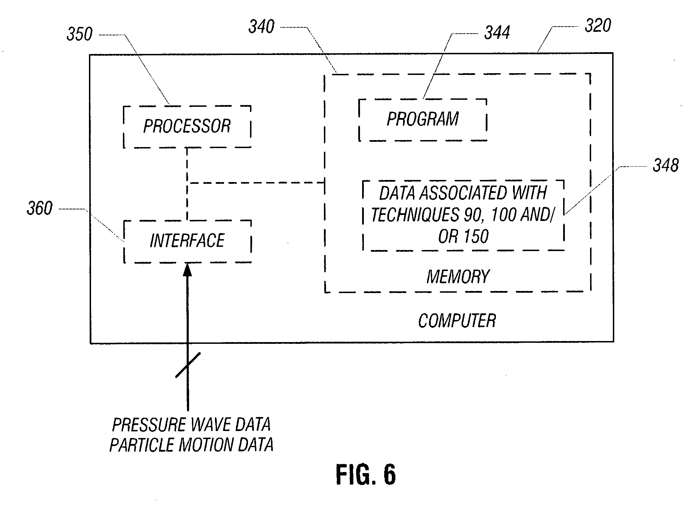

The goal of the seismic acquisition is to build up an image of a survey area for purposes of identifying subterranean geological formations, such as the exemplary geological formation 65. Subsequent analysis of the representation may reveal probable locations of hydrocarbon deposits in subterranean geological formations. Depending on the particular embodiment of the invention, portions of the analysis of the representation may be performed on the seismic survey vessel 20, such as by the signal processing unit 23. In accordance with other embodiments of the invention, the representation may be processed by a seismic data processing system (such as an exemplary seismic data processing system 320 that is depicted in Fig. 6 and is further described below) that may be, for example, located on land or on the vessel 20. Thus, many variations are possible and are within the scope of the appended claims.

The down going pressure waves create an interference known as "ghost" in the art. Depending on the incidence angle of the up going wavefield and the depth of the streamer 30, the interference between the up going and down going wavefields creates nulls, or notches, in the recorded spectrum. These notches may reduce the useful bandwidth of the spectrum and may limit the possibility of towing the streamers 30 in relatively deep water (water greater than 20 meters (m), for example).

The technique of decomposing the recorded wavefield into up and down going components is often referred to as wavefield separation, or "deghosting." The particle motion data that is provided by the multi-component seismic sensors 58 allows the recovery of "ghost" free data, which means data that is indicative of the upgoing wavefield.

In addition to providing the ability to remove surface ghosts, the multi-component data also permits the interpolation of the pressure data in the cross-line direction (i.e., along the y axis) by using the fact that the cross-line component of the particle velocity (called "$V_y$") is proportional to the cross-line gradient of the pressure (P).

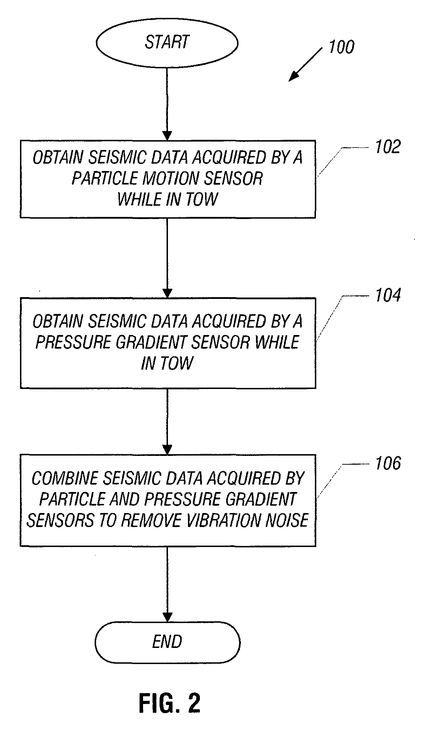

Particle motion sensors such as the above-described accelerometers and pressure gradient sensors may be quite sensitive to vibration noise. The measurements that are acquired by the particle motion sensors may therefore contain vibration noise, which may be difficult to separate from the measured acoustic signal. However, in accordance with embodiments of the invention, which are described herein, measurements from different types of particle motion sensors are combined in a way that filters out the vibration noise. More specifically, referring to Fig. 2, in accordance with embodiments of the invention, a technique 100 includes obtaining (block 102) a first measurement, which was acquired by a particle motion sensor and obtaining (block 104) a second measurement, which was acquired by a pressure gradient sensor. The particle motion and pressure gradient sensors are part of the same streamer and may be positioned in proximity to each other. The first and second measurements are combined, pursuant to block 106, to remove vibration noise.

As a more specific example, vibration noise removed is vibration noise that is transverse to the inline axis of the streamer; and the removal of the vibration noise is based on the following observations: 1.) transverse pressure gradient and accelerometer measurements of an acoustic propagating signal at a particular axial location and time have opposite polarities; and 2.) the transverse pressure gradient and accelerometer measurements of vibration at a particular axial location and time have the same polarity. As described below, by subtracting one of the particle motion and pressure gradient measurements from the other with the appropriate scaling, the transverse vibration noise may be removed, or cancelled.

In general, an accelerometer measurement in the depth (z) direction (see axes 59 in Fig. 1), called "$a_{z\_meas}$," may be described as follows:

$$a_{z\_meas} = a_{z\_aps} + a_{z\_vib}, \qquad\qquad \text{Eq. 1}$$

where "$a_{z\_aps}$" represents the component of the measurement that is attributable to an acoustic propagating signal; and

"$a_{z\_vib}$" represents the component of the measurement, which is attributable to vibration noise.

Similarly, the pressure gradient measurement in the depth (z) direction, called "$\frac{\partial p}{\partial z} meas$," may be described as follows:

$$\frac{\partial p}{\partial z} meas = \frac{\partial p}{\partial z} aps + \frac{\partial p}{\partial z} vib , \qquad \text{Eq. 2}$$

where "$\frac{\partial p}{\partial z} aps$" ¹ represents the component of the measurement, which is attributable to the acoustic propagating

signal; and "$\frac{\partial p}{\partial z} vib$" represents the component of the measurement,

which is attributable to vibration noise.

The acoustic propagating signal components of Eqs. 1 and 2 are interrelated, as described below:

$$\frac{\partial p}{\partial z} aps = -\rho a_{z\_aps} , \qquad \text{Eq. 3}$$

where "ρ" represents the density of water.

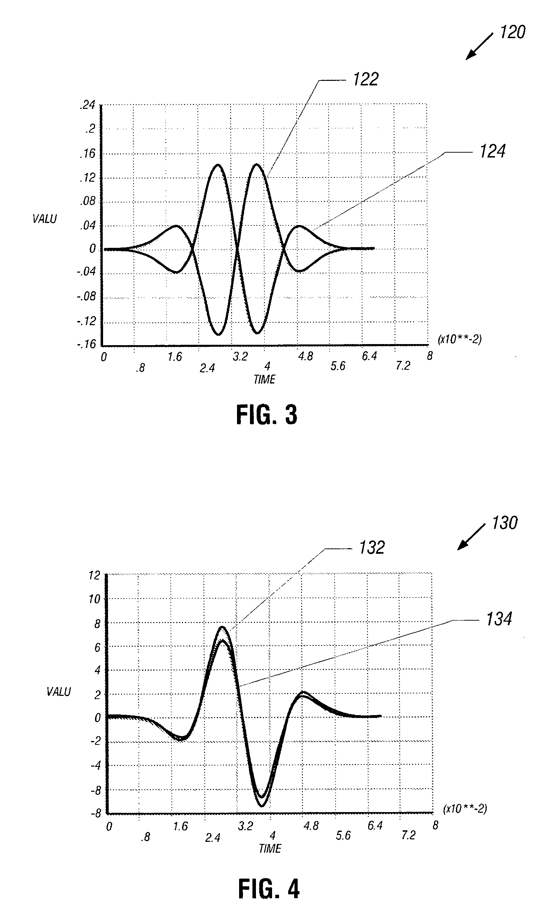

In view of Eq. 3, the acceleration due to the acoustic propagating signal, which is experienced by particles in the fluid (including the streamer) has a sign that is opposite to that of the pressure gradient. Graphically, Fig. 3 depicts this relationship. More specifically, Fig. 3 is an illustration 120 of a waveform 122 depicting the $\frac{\partial p}{\partial z}$‘ component and a waveform 124 of the $a_{z\_aps}$ component scaled by the factor "ρ".

When the streamer is vibrating in water, the vibrating motion generates a pressure field around the streamer. The pressure is larger in front of the streamer as the streamer moves (due to particles being pushed) and lower behind the streamer. Therefore, the local pressure gradient is in the same direction and has the same sign as the cable acceleration. Fig. 4 depicts an illustration 130 of a waveform 132 of the $\frac{\partial p}{\partial z} vib$ measurement and a waveform 134 depicting the $a_{z\_vib}$ measurement scaled by the factor "ρ". As shown in Fig. 4, the polarities are the same.

Thus, the z, or depth, component of the pressure gradient measurement, which is attributable to vibration noise is related to the z component of the measured acceleration, which is attributable to vibration noise, as set forth below:

$$\frac{\partial p}{\partial z} vib = \frac{\rho a_{z\_vib}}{k_z(\omega)} , \qquad \text{Eq. 4}$$

where "$k_z$" represents a scaling factor, which may be relatively constant and close to 1.0. However, Eq.4 allows for using a frequency-dependent calibration in order to increase accuracy and allow for design and manufacturing variations.

Because the transverse vibration components of the accelerometer and pressure gradient measurements have the same polarity, and the transverse acoustic propagating signal components of the accelerometer and pressure gradient measurements have opposite polarities, the measurements may be mathematically combined to eliminate the transverse vibration components that are shared in common. More specifically, in accordance with some embodiments of the invention, the pressure gradient measurement may be scaled by the appropriate factor (to effectively convert it into an acceleration measurement) and subtracted from the accelerometer measurement to cancel out the vibration component shared in common and produce a measurement that is indicative of the transverse acoustic propagating signal without the transverse vibration noise. In this manner, the pressure gradient measurement that is described in Eq. 2 may be converted into an acceleration measurement (pursuant to the relationships that are set forth in Eqs. 3 and 4) and subtracted from the actual accelerometer measurement (described by Eq. 1) to derive an acceleration signal in the z, or depth, direction (called "$a_{z,signal}$"), which does not contain the vibration noise component:

$$a_{z,signal} = \frac{1}{1+k_z(\omega)}\left[a_{z\_meas} - \frac{k_z(\omega)}{\rho}\frac{\partial p}{\partial z}meas\right]. \qquad \text{Eq. 5}$$

Similarly, a vibration-free acceleration signal in the y, or crossline, direction (see axes 59 in Fig. 1) may be derived as follows based on the pressure gradient and accelerometer measurements along the crossline direction, as set forth below:

$$a_{y,signal} = \frac{1}{1+k_y(\omega)}\left[a_{y\_meas} - \frac{k_y(\omega)}{\rho}\frac{\partial p}{\partial y}meas\right]. \qquad \text{Eq. 6}$$

Again, the scaling of the pressure gradient measurements by $k_y$ (Eq. 6) and $k_z$ (Eq. 5) may be relatively constant and close to 1.0. However, Eqs. 5 and 6 allow for using a frequency-dependent calibration in order to increase accuracy and allow for design and manufacturing variations.

Among the advantages of the techniques that are set forth herein, the sampling requirement is no longer determined by the acoustic propagating signal. This results in a dramatic decrease in the number of required sensors, as compared to conventional techniques of using accelerometer measurements only. The decrease in the sensor groups may be, as an example, as large as a factor of ten.

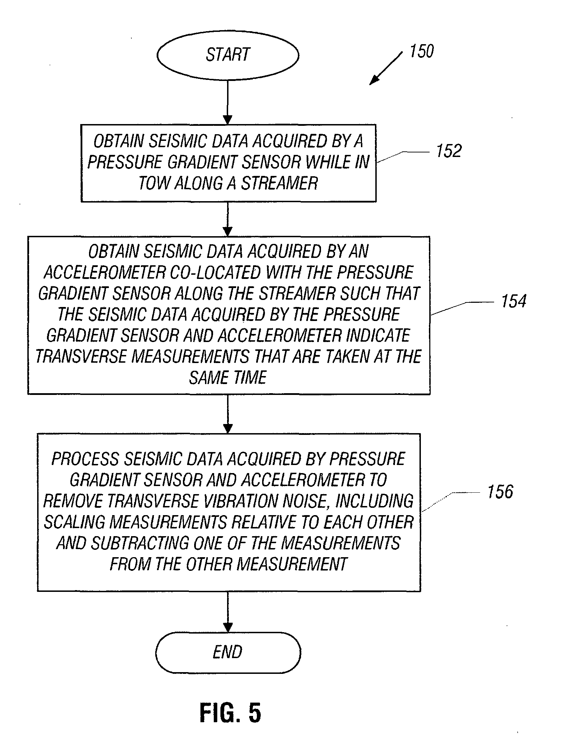

Referring to Fig. 5, to summarize, in accordance with embodiments of the invention described herein, a technique 150 includes obtaining (block 152) a first measurement that was acquired by a pressure gradient sensor while in tow and obtaining (block 154) a second measurement that was acquired by an accelerometer while in tow. The first and second measurements are taken at the same time, and are measurements in a direction that is transverse to the streamer cable. Furthermore, the accelerometer and the pressure gradient sensor are part of the same streamer and may be in proximity to each other (i.e., co-located). The seismic data from the pressure gradient sensor and accelerometer are processed (block 156) to remove transverse vibration noise. This processing includes scaling the pressure gradient and particle motion measurements relative to each other, and subtracting one of the measurements from the other measurement.

Referring to Fig. 6, in accordance with some embodiments of the invention, a seismic data processing system 320 may perform the techniques that are disclosed herein for purposes of removing vibration noise from a particle motion measurement. In accordance with some embodiments of the invention, the system 320 may include a processor 350, such as one or more microprocessors and/or microcontrollers. The processor 350 may be located on a streamer 30 (Fig. 1), located on the vessel 20 or located at a land-based processing facility (as examples), depending on the particular embodiment of the invention.

The processor 350 may be coupled to a communication interface 360 for purposes of receiving seismic data that corresponds to pressure and particle motion measurements. Thus, in accordance with embodiments of the invention described herein, the processor 350, when executing instructions stored in a memory of the seismic data processing system 320, may receive multi-component data that is acquired by multi-component seismic sensors while in tow. It is noted that, depending on the particular embodiment of the invention, the multi-component data may be data that is directly received from the multi-component seismic sensor as the data is being acquired (for the case in which the processor 350 is part of the survey system, such as part of the vessel or streamer) or may be multi-component data that was previously acquired by the seismic sensors while in tow and stored and communicated to the processor 350, which may be in a land-based facility, for example.

As examples, the interface 360 may be a USB serial bus interface, a network interface, a removable media (such as a flash card, CD-ROM, etc.) interface or a magnetic storage interface (IDE or SCSI interfaces, as examples). Thus, the interface 360 may take on numerous forms, depending on the particular embodiment of the invention.

In accordance with some embodiments of the invention, the interface 360 may be coupled to a memory 340 of the seismic data processing system 320 and may store, for example, various data sets involved with the techniques 100 and/or 150, as indicated by reference numeral 348. The memory 340 may store program instructions 344, which when executed by the processor 350, may cause the processor 350 to perform one or more of the techniques that are disclosed herein, such as the techniques 100 and/or 150, as examples.

While the present invention has been described with respect to a limited number of embodiments, those skilled in the art, having the benefit of this disclosure, will appreciate numerous modifications and variations therefrom. It is intended that the appended claims cover all such modifications and variations as fall within the true spirit and scope of this present invention.

**Claims**

1.  An article comprising a computer accessible storage medium storing instructions that when executed by a processor-based system cause the processor-based system to:

    access data indicative of a particle motion measurement and a pressure measurement acquired by seismic sensors while in tow; and
    process the data to remove vibration noise from the measurements, the processing of the data including scaling the measurements relative to each other and subtracting one of the measurements from the other measurement.

2.  The article of claim 1, wherein the particle motion measurement comprises a measurement acquired by an accelerometer.

3.  The article of claim 1, wherein the particle motion and pressure gradient measurements are taken along a direction generally traverse to a streamer and the vibration noise comprises vibration noise along a direction generally traverse to the streamer.

4.  The article of claim 3, wherein the direction along which the particle motion and pressure gradient measurements are taken comprises a crossline direction.

5.  The article of claim 3, wherein the direction along which the particle motion and pressure gradient measurements are taken comprises a vertical direction.

6.  The article of claim 1, wherein the particle motion and pressure gradient measurements are acquired at approximately the same time.

7.  The article of any preceding claim where the particle motion measurements are accelerometer measurements and the pressure measurement is a pressure gradient measurement, and the instructions cause the processor-based system to process the data to eliminate transverse vibration noise.

**Patentansprüche**

1.  Artikel, der ein rechnerverfügbares Speichermedium umfasst, das Anweisungen speichert, die, wenn sie durch ein prozessorbasiertes System ausgeführt werden, veranlassen, dass das prozessorbasierte System:

    auf Daten zugreift, die eine Teilchenbewegungsmessung und eine Druckmessung anzeigen, erfasst durch seismische Sensoren, während sie sich im Schlepp befinden, und
    die Daten verarbeitet, um Vibrationsrauschen aus den Messungen zu entfernen, wobei das Verarbeiten der Daten das Skalieren der Messungen im Verhältnis zueinander und das Abziehen der einen der Messungen von der anderen Messung einschließt.

2.  Artikel nach Anspruch 1, wobei die Teilchenbewegungsmessung eine Messung, erfasst durch einen Beschleunigungsmesser, umfasst.

3.  Artikel nach Anspruch 1, wobei die Teilchenbewegungs- und die Druckgradientenmessung längs einer Richtung, im Allgemeinen quer zu einem Streamer, vorgenommen werden und das Vibrationsrauschen ein Vibrationsrauschen längs einer Richtung, im Allgemeinen quer zu dem Streamer, umfasst.

4.  Artikel nach Anspruch 3, wobei die Richtung, längs derer die Teilchenbewegungs- und die Druckgradientenmessung vorgenommen werden, eine Querlinienrichtung umfasst.

5.  Artikel nach Anspruch 3, wobei die Richtung, längs derer die Teilchenbewegungs- und die Druckgradientenmessung vorgenommen werden, eine vertikale Richtung umfasst.

**6.** Artikel nach Anspruch 1, wobei die Teilchenbewegungs- und die Druckgradientenmessung zu ungefähr der gleichen Zeit erfasst werden.

**7.** Artikel nach einem der vorhergehenden Ansprüche, wobei die Teilchenbewegungsmessungen Beschleunigungsmesser-Messungen sind und die Druckmessung eine Druckgradientenmessung ist und die Anweisungen veranlassen, dass das prozessorbasierte System die Daten verarbeitet, um quer gerichtetes Vibrationsrauschen zu entfernen.

## Revendications

**1.** Article, comprenant un support d'enregistrement accessible par ordinateur, stockant des instructions qui, lors de leur exécution par un système à base d'un processeur entraînent le système à base de processeur à :

accéder aux données indicatrices d'une mesure du déplacement de particules et d'une mesure de la pression acquises par des capteurs sismiques lors du remorquage ; et
traiter les données pour éliminer les bruits de vibrations des mesures, le traitement des données englobant la mise à l'échelle des mesures l'une par rapport à l'autre et la soustraction de l'une des mesures de l'autre mesure.

**2.** Article selon la revendication 1, dans lequel la mesure du déplacement des particules comprend une mesure acquise par un accéléromètre.

**3.** Article selon la revendication 1, dans lequel les mesures du déplacement des particules et du gradient de pression sont effectuées le long d'une direction généralement transversale à une flûte sismique, les bruits de vibrations comprenant des bruits de vibrations le long d'une direction généralement transversale à la flûte sismique.

**4.** Article selon la revendication 3, dans lequel la direction le long de laquelle les mesures du déplacement des particules et du gradient de pression sont effectuées comprend une direction transversale.

**5.** Article selon la revendication 3, dans lequel la direction le long de laquelle les mesures du déplacement des particules et du gradient de pression sont effectuées comprend une direction verticale.

**6.** Article selon la revendication 1, dans lequel les mesures du déplacement des particules et du gradient de pression sont acquises approximativement en même temps.

**7.** Article selon l'une quelconque des revendications précédentes, dans lequel les mesures du déplacement des particules sont des mesures prises par un accéléromètre, la mesure de la pression étant une mesure du gradient de pression, et les instructions entraînant le système à base de processeur à traiter les données de sorte à éliminer les bruits de vibrations transversaux.

**FIG. 1**

**FIG. 2**

FIG. 3

FIG. 4

START

*150*

OBTAIN SEISMIC DATA ACQUIRED BY A
PRESSURE GRADIENT SENSOR WHILE IN
TOW ALONG A STREAMER

*152*

OBTAIN SEISMIC DATA ACQUIRED BY AN
ACCELEROMETER CO-LOCATED WITH THE PRESSURE
GRADIENT SENSOR ALONG THE STREAMER SUCH THAT
THE SEISMIC DATA ACQUIRED BY THE PRESSURE
GRADIENT SENSOR AND ACCELEROMETER INDICATE
TRANSVERSE MEASUREMENTS THAT ARE TAKEN AT THE
SAME TIME

*154*

PROCESS SEISMIC DATA ACQUIRED BY PRESSURE
GRADIENT SENSOR AND ACCELEROMETER TO
REMOVE TRANSVERSE VIBRATION NOISE, INCLUDING
SCALING MEASUREMENTS RELATIVE TO EACH OTHER
AND SUBTRACTING ONE OF THE MEASUREMENTS
FROM THE OTHER MEASUREMENT

*156*

END

**FIG. 5**

FIG. 6